Europäisches Patentamt

European Patent Office

Office européen des brevets

(19)

(11) Numéro de publication: **0 310 480**
**A1**

(12) **DEMANDE DE BREVET EUROPEEN**

(21) Numéro de dépôt: **88402405.0**

(22) Date de dépôt: **23.09.88**

(51) Int. Cl.⁴: **C 01 G 25/02**

(30) Priorité: **29.09.87 FR 8713421**

(43) Date de publication de la demande:
**05.04.89 Bulletin 89/14**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevole Cédex (FR)**

(72) Inventeur: **Samdi, Azzedine**
**5, Rue Cadi Zemmouri Quartier des Habous**
**Casablanca 03 (MA)**

**Paris, René**
**152 Cours Gambetta**
**F-69007 Lyon (FR)**

**Roubin, Marc**
**9, Rue d'Auvergne**
**F-69330 Meyzieu (FR)**

(74) Mandataire: **Dubruc, Philippe et al**
**RHONE-POULENC INTERSERVICES Service Brevets**
**Chimie 25, quai Paul-Doumer**
**F-92408 Courbevole Cédex (FR)**

(54) **Procédé de préparation de zircone stabilisée à l'yttrium et produit ainsi obtenu.**

(57) L'invention a trait à un procédé de préparation d'une poudre fine de zircone stabilisée à l'yttrium essentiellement sous la forme quadratique, ledit procédé étant caractérisé en ce qu'il comprend les étapes suivantes :

a) on prépare un mélange aqueux d'acétate de zirconyle et d'acétate d'yttrium,

b) on amène le pH dudit mélange à une valeur au moins égale à 5,

c) on élimine le solvant dudit mélange,

d) on pyrolyse le résidu solide obtenu à l'issue de l'étape c).

Elle concerne également les produits obtenus par ledit procédé.

EP 0 310 480 A1

Bundesdruckerel Berlin

**Description**

## PROCEDE DE PREPARATION DE ZIRCONE STABILISEE A L'YTTRIUM ET PRODUIT AINSI OBTENU

La présente invention a trait à un procédé perfectionné de préparation de poudres fines de zircone stabilisée à l'yttrium.

Elle concerne également, à titre de produits industriels nouveaux, les zircones stabilisées obtenues par ledit procédé.

Les zircones stabilisées, et en particulier les zircones stabilisées à l'yttrium, sont des matériaux très utilisés dans la préparation de compositions céramiques pour l'obtention notamment de hautes propriétés mécaniques, thermo-mécaniques et électriques.

On sait que les meilleures propriétés mécaniques et thermo-mécaniques sont acquises à partir d'une zircone monophasique constituée de grains quadratiques métastables obtenus en incorporant des quantités déterminées d'oxyde d'yttrium dans le réseau de la zircone.

Les pièces denses en zircone stabilisée étant obtenues par frittage des poudres de composition correspondante, on conçoit aisement que l'amélioration de leurs propriétés impose tout d'abord un effort particulier au niveau de la fabrication des poudres elles-mêmes ; la production d'une bonne céramique à partir d'une mauvaise poudre constitue en effet un défi qu'aucun céramiste n'a pu relever à ce jour.

Plus précisément, les poudres de départ doivent être très fines, c'est à dire très réactives, de bonne pureté et se présenter sous une forme quadratique avec une répartition parfaitement homogène de l'oxyde d'yttrium au sein de la zircone.

Cette dernière exigence est essentiellement pour ne pas aboutir, après frittage, à des zircones stabilisées du type polyphasique, c'est à dire présentant à côté de la phase quadratique désirée une quantité non négligeable de phases parasites, notamment monoclinique.

D'autre part, d'un point du vue industriel, il est important que la synthèse de ces poudres soit aisée et puisse être réalisée à des températures aussi basses que possible et à des coûts acceptables.

On connait à l'heure actuelle divers procédés tendant à la préparation de poudres fines de zircone stabilisée.

L'un des plus anciens consiste à faire réagir en phase solide un mélange intime de poudres fines d'oxyde de zirconium et d'un oxyde de l'élément stabilisant, par exemple $Y_2O_3$. Cette technique présente cependant l'inconvénient d'être basée sur des réactions de diffusion à la fois lentes et difficiles entre solides cristallisés, de nécessiter des températures très élevées et d'entrainer souvent des risques d'une part de formation de solutions solides hétérogènes et d'autre part d'introduction d'impuretés génantes lors de l'étape de broyage ultérieure généralement nécessaire après calcination.

Plus récemment, on a découvert qu'il était également envisageable de procéder par pyrolyse de précurseurs obtenus au moyen de diverses réactions se déroulant en phase liquide.

Les procédés généralement décrits dans la littérature et reposant sur ce principe consistent à mélanger sous forme de solutions aqueuses un sel de zirconium ou de zirconyle et un sel du composé stabilisant (sulfate, chlorure, nitrate, ...) puis à faire coprécipiter par ajout d'ammoniaque ou d'une base alcaline les deux métaux sous la forme de leurs hydroxydes, à séparer les coprécipités du milieu de réaction puis à les pyrolyser.

Les précipités d'hydroxydes se présentent généralement sous la forme de gels amorphes ou d'aggrégats de fins cristaux mal cristallisés.

Une telle voie présente cependant plusieurs inconvénients. D'une part, les gels d'hydroxydes peuvent adsorber des ions en quantité plus ou moins importante et ces impuretés, qui ne sont jamais éliminées complètement lors du lavage des précipités, demeurent dans les oxydes après le traitement thermique de déshydratation, à l'exception bien entendu des espèces suffisamment volatiles, ce qui peut être très génant.

D'autre part, la présence d'eau lors de la déshydratation des hydroxydes favorise la cristallisation de ces derniers, de sorte que leur réactivité diminue et la solution solide ne se forme complètement qu'à des températures supérieures à 1000°C.

Enfin, il n'est pas possible de contrôler par cette technique la taille des précipités, de sorte que la pyrolyse de ces derniers conduit généralement à des particules dont la distribution des tailles est relativement inhomogène.

Une autre méthode, plus intéressante, consiste à pyrolyser des précurseurs solides constitués d'un mélange homogène de complexes organiques, du type carboxylates (acétates, formiates, citrates, ...), du zirconium et du composé stabilisant, lesdits précurseurs étant obtenus par évaporation d'un mélange aqueux des sels correspondants.

Cette méthode, décrite dans le brevet français n° 1.558.466, présente l'avantage de permettre l'obtention de solutions solides à des tempéra tures relativement basses et directement sous la forme de poudres fines.

Toutefois, en tentant de suivre l'enseignement du brevet FR 1.558.466 précédemment cité pour préparer une poudre de zircone stabilisée à l'yttrium, la Demanderesse n'a pas été en mesure d'obtenir une solution solide essentiellement monophasique et du type quadratique, et a été en conséquence amenée à poursuivre d'importantes recherches en vue de perfectionner cette technique.

La présente invention a donc pour but de résoudre le problème ci-dessus et de proposer des moyens simples, efficaces et de mise en oeuvre aisée, pour obtenir de manière fiable et reproductible des poudres finement divisées de zircone stabilisée à l'yttrium essentiellement sous la forme quadratique, présentant une granulométrie aussi étroite que possible et une répartition homogène de l'élément stabilisant au sein de la zircone.

On entend ici par "essentiellement" sous la forme quadratique le fait qu'au moins 90 % en mole de la zircone stabilisée se trouve dans cette phase.

On a maintenant trouvé que ces buts peuvent être atteints au moyen d'un procédé de préparation perfectionné selon l'invention et qui est caractérisé en ce qu'il comprend les étapes suivantes :

a) on prépare un mélange aqueux d'acétate de zirconyle et d'acétate d'yttrium,

b) on amène le pH dudit mélange à une valeur au moins égale à 5,

c) on élimine le solvant dudit mélange,

d) on pyrolyse le résidu solide obtenu à l'issue de l'étape c), ce par quoi l'on obtient une poudre fine de zircone stabilisée à l'yttrium essentiellement sous la forme quadratique.

Globalement, la Demanderesse a donc mis en évidence que, de façon totalement inattendu et surprenante, le contrôle du pH du mélange contenant les acétates de zirconyle et d'yttrium constitue un paramètre critique essentiel pour l'obtention de poudres fines de zircone stabilisée à l'état quadratique.

Mais, d'autres caractéristiques et avantages de l'invention apparaîtront plus complètement à la lecture de la description qui va suivre et des exemples concrets, mais non limitatifs, relatifs à sa mise en oeuvre.

Le mélange aqueux initial peut être préparé soit par introduction directe puis dissolution des acétates solides de zirconyle et d'yttrium dans de l'eau, soit par mélange de deux solutions aqueuses distinctes desdites sels.

Les acétates de zirconyle et les acétates d'yttrium, sous forme solide ou en solution, sont des produits classiques du commerce et sont facilement synthétisables.

Les quantités de zirconium et d'yttrium introduites dans le milieu réactionnel doivent être dans le rapport souhaité pour la solution solide finale.

Pratiquement, le rapport des concentrations molaires entre l'acétate de zirconyle et l'acétate d'yttrium contenus dans le mélange aqueux initial est choisi de manière telle que la teneur en yttrium (exprimée en $Y_2O_3$) de la poudre de zircone stabilisée varie de 0,001 à 10 % molaire, de préférence entre 1,5 et 6 % molaire, et encore plus préférentiellement de 2 à 4 % molaire.

Après homogénéisation, le pH du mélange se situe alors à une valeur de 4,6 environ.

Selon une caractéristique essentielle du procédé selon l'invention, on amène alors le pH du mélange à une valeur au moins égale à 5.

Cette opération peut être réalisée par tout moyen connu en soi, notamment par ajout d'une base telle que de l'ammoniac gazeux ou une solution ammoniacale.

Lors de l'ajout de l'agent basique, il est préférable d'éviter toute surconcentration locale qui pourrait avoir pour effet d'entrainer des augmentations locales et momentanées du pH au sein du milieu réactionnel.

Le contrôle de l'homogénéité du pH au sein de ce milieu peut être obtenu par exemple en utilisant des solutions d'ammoniaque très diluées ou des débit d'ammoniac gazeux très faibles.

Toutefois, selon un mode particulier et préféré de mise en oeuvre du procédé selon l'invention, on procède à une formation d'ammoniac "in situ" au sein du milieu réactionnel, et ceci par exemple en introduisant dans ledit milieu de l'urée qui, par décomposition à chaud, donnera un dégagement d'ammoniac selon le mécanisme :

$(NH_2)_2 CO + H_2O \rightleftarrows 2 NH_3 + CO_2$

Le mélange ayant été porté à la valeur de pH désirée, on procède alors à l'élimination du solvant.

Cette opération peut être réalisée par tout moyen connu en soi, notamment par évaporation, à chaud ou sous vide.

Préférentiellement, on éliminera le solvant par évaporation lente à chaud sur un bain de sable maintenu à une température comprise entre 60 et 90°C.

A l'issue de cette étape, on récupère un résidu solide blanc, amorphe aux rayons X, et correspondant à un véritable acétate mixte zirconium-yttrium avec une répartition homogène de l'yttrium au sein du réseau de l'acétate de zirconium.

Sans vouloir limiter la présente invention à la théorie, il est probable que le caractère amorphe et parfaitement homogène du précurseur solide récupéré soit à l'origine de son comportement remarquable à la pyrolyse pour l'obtention de solutions solides $ZrO_2$-$Y_2O_3$ quadratiques et parfaitement homogènes.

Le résidu solide ainsi récupéré est alors pyrolysé. Cette pyrolyse est de préférence menée sous atmosphère oxydante, par exemple sous air, et ceci dans le but de favoriser l'élimination du carbone. La température de pyrolyse est comprise entre 800°C et une température correspondant au début d'un phénomène de frittage entre les grains ; cette température limite supérieure se situe généralement aux environs de 1100°C. Préférentiellement, la température de pyrolyse est comprise entre 850 et 1000°C.

L'analyse granulométrique de la poudre issue de cette pyrolyse montre que celle-ci est constituée d'agglomérats dont le diamètre varie de 0,5 μm à 10 μm, en étant centré sur une valeur moyenne comprise entre 2 et 3 μm.

L'analyse par microscopie électronique montre d'autre part que ces agglomérats sont constitués de fins agrégats dont la taille varie entre 0,1 et 1,3 μm, en étant centrée sur une valeur moyenne comprise entre 0,1 et 0,3 μm, ces agrégats étant eux-mêmes constitués de cristallites élémentaires de taille comprise entre 100 et 300 Å.

D'autre part, on observe par analyse radiocristallographique que ces poudres sont essentiellement, voire totalement, sous forme quadratique (absence de phase monoclinique et de phase $Y_2O_3$) et une étude par microanalyse X met en évidence une répartition très homogène de l'yttrium au sein du réseau de la zircone.

Les poudres obtenues selon le procédé de l'invention présentent une très bonne aptitude à la compaction et sont particulièrement bien adaptées pour l'obtention, par frittage à des températures comprises entre 1200 et 1500°C, de pièces massives et denses en zircone yttriée métastable quadratique.

Des exemples illustrant l'art antérieur et l'invention vont maintenant être donnés :

### A/ Protocole opératoire commun

La méthode consiste à évaporer une solution aqueuse d'acétates contenant des quantités de zirconium et d'yttrium dans le rapport souhaité pour la solution solide finale.

Une solution d'acétate d'yttrium est préparée par dissolution d'oxyde d'yttrium dans l'acide nitrique puis élimination des ions nitrates par addition d'anhydride acétique. Cette solution est alors mélangée à une solution commerciale d'acétate de zirconyle à 22 g de $ZrO_2$ par litre (commercialisé par RIEDEL-DE HAEN), puis le mélange est totalement évaporé sur bain de sable à 80-90°C.

Le solide blanc résultant est décomposé par calcination sous air à une température comprise entre 900 et 1000°C, avec ou sans palier.

### B/ Essais comparatifs 1 à 7

Ces essais illustrent un procédé de préparation tel que décrit dans le brevet FR 1 558 466, et cité ici à titre d'état de la technique le plus proche de la présente invention.

Le pH naturel du mélange est de 4,6. Pour certains essais, il a été ramené à 2 par ajout d'acide acétique.

Les résultats de ces essais sont consignés dans le tableau I ci-dessous

TABLEAU I

| ESSAIS | TENEUR EN YTTRIUM DANS LE MELANGE % | pH | TEMPERATURE DE PYROLYSE (°C) | PALIER (heures) | PHASES OBSERVEES | | |
|---|---|---|---|---|---|---|---|
| | | | | | $ZrO_2$ (M) | $ZrO_2$ (C) et/ou (Q) | $Y_2O_3$ |
| 1 | 1,59 | 2 | 930 | 1 | 67 | 33 | - |
| 2 | 3,15 | 2 | 930 | 1 | 59 | 41 | - |
| 3 | 5,83 | 2 | 930 | 1 | 56 | 44 | - |
| 4 | 6,76 | 4,6 | 1000 | 0 | 83 | 12 | 5 |
| 5 | 9,52 | 4,6 | 1000 | 0 | 64 | 27 | 9 |
| 6 | 21,4 | 4,6 | 930 | 1 | 61 | 16 | 23 |
| 7 | 26,4 | 4,6 | 930 | 1 | 69 | 7 | 24 |

EP 0 310 480 A1

Remarques :

1) La teneur en yttrium dans le mélange est exprimée en pourcentage molaire par rapport à la somme yttrium + zirconium
( [Y] / [Y] + [Zr] )

2) Les phases observées dans le résidu de pyrolyse ont été déterminées par analyse radiocristallographique ( C = cubique ; Q = quadratique ; M = monoclinique ).Elles sont exprimées en pourcentage molaire.

Ces essais mettent nettement en évidence l'impossibilité d'obtenir des poudres de zircone stabilisée à l'yttrium essentiellement sous la forme quadratique en suivant l'enseignement de l'état de la technique antérieure.

C/ Essais n° 8 à 13

Ces essais illustrent le procédé perfectionné selon l'invention.

Le pH du mélange initial a été relevé par ajout d'une solution d'ammoniaque diluée.

La pyrolyse a été effectuée à 930°C avec un palier d'une heure à cette température.

Les résultats de ces essais sont consignés dans le tableau II ci-dessous.

TABLEAU II

| ESSAIS | TENEUR EN YTTRIUM DANS LE MELANGE % | pH | PHASES OBSERVEES | | |
|---|---|---|---|---|---|
| | | | $ZrO_2$ (M) | $ZrO_2$ (C) | $Y_2O_3$ |
| 8 | 1,59 | 5 | 10 | 90 | - |
| 9 | 1,59 | 7 | 5 | 95 | - |
| 10 | 3,15 | 5 | 1 | 99 | - |
| 11 | 3,15 | 7 | 0 | 100 | - |
| 12 | 5,83 | 5 | 0 | 100 | - |
| 13 | 5,83 | 7 | 0 | 100 | - |

EP 0 310 480 A1

Ces essais mettent clairement en évidence que pour des valeurs de pH supérieure à 5, il est possible d'obtenir des poudres de zircone yttriée à plus de 90 % sous forme quadratique, cette teneur allant jusqu'à 100 % pour certains essais.

On notera également que le procédé selon l'invention permet d'obtenir des solutions solides du type quadratique à des températures de pyrolyse relativement basses.

D/ Caractérisation des zircones yttriées selon l'invention
Les mesures ont été réalisées sur la poudre issue de l'essai n° 13.

1/ Morphologie
L'analyse granulométrique de la poudre montre que celle-ci est constituée d'agglomérats dont le diamètre varie de 0,6 à 9 μm, avec un diamètre moyen centré sur 2,0 μm.

L'analyse par microscopie électronique indique d'autre part que ces agglomérats sont en fait constitués d'agrégats de taille comprise entre 0,1 et 1,3 μm, avec une valeur moyenne de 0,2 μm environ ; ces agrégats sont eux-mêmes constitués de cristallites élémentaires dont la taille moyenne est voisine de 200 Å.

2/ Essais de porosimétrie
Ces essais ont été réalisés sur une poudre préalablement compactée sous 40 bars au moyen d'un porosimètre à mercure, jusqu'à une pression de 2000 bars. Ces essais permettent de recueillir des renseignements complémentaires sur la porosité ouverte des poudres :
volume poreux : 0,115 cm³/g
taille des pores : 7500 Å
surface spécifique : 1,1 m²/g
Ces résultats indiquent qu'il n'existe qu'une seule population de pores ouverts dans la gamme 75 Å = 10 μm.

3/ Mesure de l'homogénéité de la solution solide
La méthode consiste à contrôler par microanalyse X l'homogénéité de la répartition de l'yttrium au sein du réseau de la zircone en déterminant les proportions d'yttrium et de zirconium pour plusieurs agglomérats (A et B) puis en effectuant les mêmes mesures en différentes zones de chaque agglomérat.

Les résultats de cette microanalyse sont consignés dans le tableau III ci-dessous.

TABLEAU III

| ZONE ANALYSEE | (*) Y % PONDERAL | (*) Zr % PONDERAL |
|---|---|---|
| Ensemble de l'agglomérat A | 6,47 | 93,53 |
| Parties du même agglomérat A | 6,46 | 93,54 |
| | 7,09 | 92,91 |
| | 6,95 | 93,05 |
| | 5,49 | 94,51 |
| Ensemble de l'agglomérat B | 6,22 | 93,78 |
| Parties du même agglomérat B | 7,58 | 92,42 |
| | 6,12 | 93,88 |
| | 7,42 | 92,85 |
| | 5,99 | 94,01 |
| | 7,15 | 92,58 |

* : les pourcentages sont exprimés par rapport à
la somme yttrium + zirconium

Ces résultats mettent nettement en évidence la très bonne répartition de l'yttrium dans le réseau de la zircone. Cette homogénéité au niveau de la poudre est le gage d'obtention d'une zircone stabilisée elle-même parfaitement homogène.

**Revendications**

1/ Procédé de préparation d'une poudre fine de zircone stabilisée à l'yttrium essentiellement sous la forme quadratique, caractérisé en ce qu'il comprend les étapes suivantes :
a) on prépare un mélange aqueux d'acétate de zirconyle et d'acétate d'yttrium,
b) on amène le pH dudit mélange à une valeur au moins égale à 5,
c) on élimine le solvant dudit mélange,
d) on pyrolyse le résidu solide obtenu à l'issue de l'étape c).

2/ Procédé selon la revendication 1 caractérisé en ce que l'on introduit dans ledit mélange de l'yttrium et du zirconium en quantités telles que la teneur en yttrium, exprimée en $Y_2O_3$, dans la poudre de zircone stabilisée soit comprise entre 1,5 et 6 % molaire.

3/ Procédé selon la revendication 2 caractérisé en ce que ladite teneur est comprise entre 2 et 4 % molaire.

4/ Procédé selon l'une quelconque des revendications précédentes caractérisé en ce que l'augmentation de pH dudit mélange se fait au moyen d'une base.

5/ Procédé selon la revendication 4 caractérisé en ce que ladite base est de l'ammoniac.

6/ Procédé selon la revendication 5 caractérisé en ce que l'ammoniac est produit "in situ" par décomposition d'urée préalablement introduite dans le mélange.

7/ Procédé selon l'une quelconque des revendications précédentes caractérisé en ce que ladite élimination du solvant se fait par évaporation à chaud.

8/ Procédé selon la revendication 7 caractérisé en ce que ladite évaporation se fait à une température comprise entre 60° et 90°C.

9/ Procédé selon l'une quelconque des revendications précédentes caractérisé en ce que ladite pyrolyse s'effectue sous une atmosphère oxydante.

10/Procédé selon la revendication 9 caractérisé en ce que ladite atmosphère est l'air.

11/Procédé selon l'une quelconque des revendications 9 et 10 caractérisé en ce que la température de pyrolyse est comprise entre 800 et 1100°C.

12/Procédé selon la revendication 11 caractérisé en ce que ladite température est comprise entre 850° et 1000°C.

13/Poudre de zircone stabilisée à l'yttrium caractérisée en oe qu'elle est à plus de 90 % en mole sous forme quadratique.

14/Poudre selon la revendication 13 caractérisé en ce qu'elle est à plus de 95 % en mole sous forme quadratique.

15/Poudre selon la revendication 14 caractérisé en ce qu'elle est à plus de 99 % en mole sous forme quadratique.

9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| E,P | EP-A-0 251 537 (CORNING GLASS WORKS)<br>* Pages 7,8; revendications 1-6; page 7, lignes 5-9; page 6, ligne 52 *<br>--- | 1-14 | C 01 G 25/02 |
| A | US-A-4 695 439 (J.E. RITSKO)<br>--- | | |
| A | EP-A-0 224 375 (MINNESOTA MINING AND MANUFACTURING)<br>* Page 7, lignes 30-37; page 17, exemple III; page 3, revendications 13,14 *<br>--- | 1-14 | |
| D,A | FR-A-1 558 466 (CO. FRANCAISE DE RAFFINAGE)<br>* Pages 2,3, exemples *<br>----- | 1,4,5,7,8,11 | |

DOMAINES TECHNIQUES
RECHERCHES (Int. Cl.4)

C 01 G
C 04 B

Le présent rapport a été établi pour toutes les revendications

| Lieu de la recherche | Date d'achèvement de la recherche | Examinateur |
|---|---|---|
| LA HAYE | 02-12-1988 | LIBBERECHT-VERBEECK E.M. |